**Europäisches Patentamt**

**European Patent Office**

**Office européen des brevets**

(19)

(11) Veröffentlichungsnummer : **0 180 007 B1**

(12)

# EUROPÄISCHE PATENTSCHRIFT

(45) Veröffentlichungstag der Patentschrift :
**16.01.91 Patentblatt 91/03**

(51) Int. Cl.⁵ : **H01G 1/14, H01G 4/38,**
**H01G 1/02**

(21) Anmeldenummer : **85111117.9**

(22) Anmeldetag : **03.09.85**

(54) **Elektrischer Wickelkondensator mit verringerter Eigeninduktivität.**

(30) Priorität : **04.10.84 DE 3436425**

(43) Veröffentlichungstag der Anmeldung :
**07.05.86 Patentblatt 86/19**

(45) Bekanntmachung des Hinweises auf die
Patenterteilung :
**16.01.91 Patentblatt 91/03**

(84) Benannte Vertragsstaaten :
**DE FR GB IT SE**

(56) Entgegenhaltungen :
**DE-A- 3 319 373**
**DE-B- 1 087 278**

(56) Entgegenhaltungen :
**DE-C- 518 497**
**FR-A- 1 338 786**
**FR-A- 2 127 237**
**FR-A- 2 129 242**
**US-A- 3 308 359**

(73) Patentinhaber : **Siemens Aktiengesellschaft**
**Wittelsbacherplatz 2**
**D-8000 München 2 (DE)**

(72) Erfinder : **Vetter, Harald, Dipl.-Ing. (FH)**
**Weinberg 7**
**D-8400 Regensburg (DE)**
Erfinder : **Schreiber, Friedewald, Dipl.-Phys.**
**Fichtenweg 10**
**D-7924 Steinheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen elektrischen Wickelkondensator mit kleiner Eigeninduktivität, der die Merkmale des Oberbegriffs von Anspruch 1 aufweist.

Bei derartigen Kondensatoren ist die Eigeninduktivität proportional zur Wickelbreite. Dazu kommt die Induktivität der Anschlußelemente vom Wickel bis zur Kontaktebene der äußeren Anschlüsse. Typische Werte liegen zwischen 1 und 3 nH/mm Induktivität pro Längeneinheit, wobei übliche Leitungsabstände in diesem Wertebereich enthalten sind. Kondensatoren mit einem Wickel erreichen bei einer Wickelbreite von ca. 60 mm bei üblicher Verschaltung eine Eigeninduktivität von ca. 100 nH und Aufbauten aus mehreren miteinander verschalteten Wickeln liegen erheblich über diesem Wert.

Es gibt nun Anwendungsfälle, z.B. beim Einsatz als Bedämpfungskondensator für GTO-Thyristoren (Gate-Turn-Off), wo die genannten Induktivitätswerte zu hoch sind. Bedämpfungskondensatoren sind Wechselspannungskondensatoren, die parallel zu Halbleiterbauelementen geschaltet sind und an diesen unerwünschte Spannungsspitzen unterdrücken oder dämpfen. Dazu ist insbesondere bei neuen Halbleiterbauelementen, wie z.B. GTO Thyristoren, eine möglichst niedere Eigeninduktivität des Bedämpfungskondensators erforderlich.

Aufgabe der vorliegenden Erfindung ist es, einen Kondensator der eingangs genannten Art anzugeben, der gegenüber den herkömmlichen Kondensatoren eine verringerte Eigeninduktivität aufweist.

Diese Aufgabe wird erfindungsgemäß durch die Merkmale des kennzeichnenden Teils von Anspruch 1 gelöst.

Der Kondensator kann z.B. aus konzentrisch aufeinander gewickelten, in Serie geschalteten Teilkapazitäten bestehen, die durch isolierende Trennfolien getrennt sind, oder der Kondensator kann ein metallisches Kernrohr aufweisen, das als koaxialer Rückleiter des einen Kondensatoranschlusses dient. Ebenso ist dazu eine Metallfolie auf der äußeren Wickelmantelfläche geeignet.

Weitere vorteilhafte Maßnahmen zur Senkung der Eigeninduktivität bestehen darin, die Elektroden im Kondensatorwickel derart anzuordnen, daß sich eine innere Reihenschaltung mit $C_n$ (n gerade) Teilkapazitäten ergibt. Dies ergibt niedrigere Induktivitätswerte als eine Wickel- Serienschaltung und ebenfalls einen niedrigeren Serienwiderstand ($R_s$). Die Abschlußscheibe kann als partiell metallisierte Epoxidharz-Platine ausgebildet sein, wobei sich die Metallisierung auf der Innenseite im Bereich der Anschlüsse und im Randbereich befindet. Weiterhin kann die Abschlußscheibe mit dem Gehäuse verklebt oder verlötet sein.

Die Vorteile des Gegenstandes der Erfindung werden anhand der folgenden Ausführungsbeispiele näher erläutert.

In der dazugehörenden Zeichnung zeigen

Fig. 1 ein teilweises Schnittbild eines Kondensators,

Fig. 2 eine Draufsicht auf metallische Anschlußkappen

Fig. 3 einen Kondensator mit metallischem Kernrohr und

Fig. 4 einen Kondensator mit außenliegender Metallfolie.

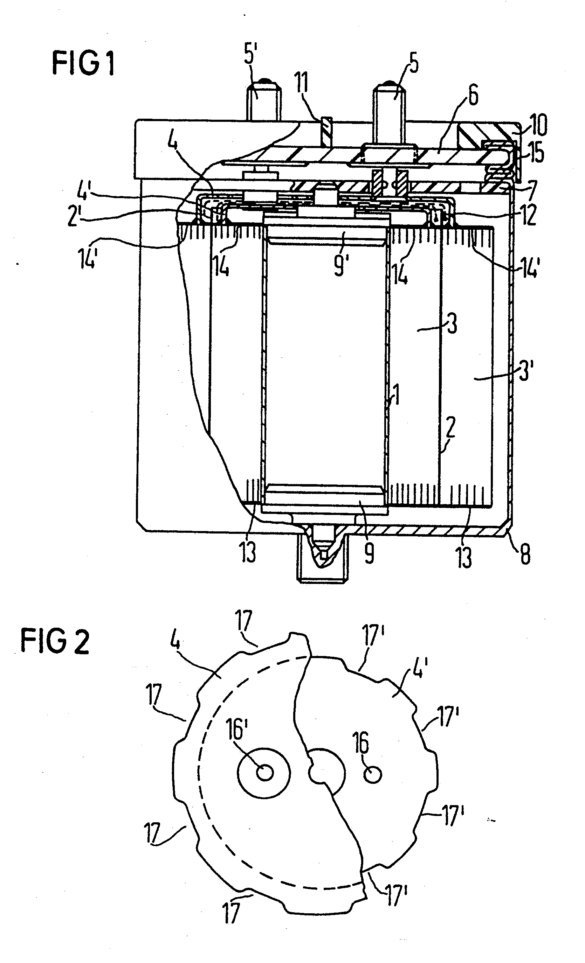

In der Fig. 1 ist ein Schnittbild eines Kondensators dargestellt, der auf ein Kernrohr 1 gewickelt ist. Die Eigeninduktivität des Kondensatorwickels ist dadurch reduziert, daß der Kondensatorwickel aus zwei Teilwickeln 3, 3' besteht die konzentrisch auf das Kernrohr 1 gewickelt sind und durch Trennlagen 2, 2' voneinander getrennt sind. Die Teilkapazitäten 3, 3' sind über die Stirnkontaktschicht 13 miteinander verbunden und dadurch in Serie geschaltet.

An die durch die Trennlagen 2, 2' voneinander getrennten Stirnkontaktschichten 14, 14' sind metallische Anschlußkappen 4, 4' radialsymmetrisch kontaktiert. Die beiden Anschlußkappen 4, 4' sind mit möglichst geringem Abstand symmetrisch zueinander angeordnet. Durch diese Ausführung ergibt sich eine besonders niederinduktive Leitung zu den äußeren Anschlüssen 5, 5'. Gleichzeitig ist damit eine weitere Reduzierung des Serienwiderstandes ($R_s$) verbunden.

Die beiden metallischen Anschlußkappen 4, 4' sind durch eine Isolierkappe 12 elektrisch gegeneinander isoliert.

Die Zentrierplatte 7, die gewährleistet, daß der Wickel zentrisch im Becher positioniert wird, kann bei kleinem Wickeldurchmesser entfallen. Dann werden die inneren Anschlüsse (Anschlußkappen bzw. Bandleitungen) direkt mit der Abschlußscheibe 6 verlötet.

Der Kondensator ist im Gehäuse 8 durch im Kernrohr 1 angeordnete Zentrierscheiben 9, 9' zentrisch eingebaut Die äußeren Anschlüsse 5, 5' befinden sich in der Abschlußscheibe 6.

Die Abschlußscheibe 6 besteht aus einer gegebenenfalls glasfaserverstärkten Epoxidharz-Platine, die in der DE-OS 33 19 373 beschrieben ist und deren thermisch linearer Ausdehnungskoeffizient an den Werkstoff des Gehäuses 8 angepaßt ist. Die Abschlußscheibe 6 besitzt vorzugsweise eine partielle Metallisierung, die beispielsweise durch reaktives Abätzen einer Kupferkaschierung erhalten wird. Die Metallisierung befindet sich auf der Innenseite der Abschlußscheibe 6 im Bereich der äußeren Anschlüsse 5, 5' und ist mit diesen Anschlüssen 5, 5' elektrisch leitend verbunden, so daß hier die inneren Anschlußelemente (Kappen 4, 4' bzw. Bandleitungen) angelötet werden können.

Am Verschluß des Kondensatorbechers 8 befinden sich ein Isolierring 10 und zwischen den beiden äußeren Anschlüssen 5, 5' ist ein Isoliersteg 11 angeordnet. Der Abstand der äußeren Anschlüsse 5, 5′ wird durch die notwendige Isolierung bestimmt.

Um niedrige Induktivitätswerte zu erhalten, ist es vorteilhaft, den Abstand zwischen Abschlußscheibe 6 und den inneren Anschlüssen (Anschlußkappen 4, 4′ bzw. Bandleitungen) möglichst kurz zu bemessen.

In der Wandung des Kondensatorbechers 8 sind Faltsikken 15 angeordnet, wodurch eine in der Fig. 1 nicht dargestellte Überdruckabreißsicherung betätigt werden kann, so daß der Kondensator bei unzulässigen Überlastungen sicher abschaltet und nicht aufplatzt. Vorteilhafterweise wird die Abschaltung zweipolig ausgeführt.

Im Bereich der Faltsicken 15 kann die Abschlußscheibe 6 auf der Innen- und/oder Außenseite eine weitere partielle Metallisierung besitzen. Hier kann die Abschlußscheibe 6 auch mit dem Gehäuse 8 verklebt werden, was beispielsweise mit einem anaeroben Einkomponentenkleber oder einem Zweikomponentenkleber auf Epoxidharz-Basis geschieht. Falls das Gehäuse 8 aus einem lötbaren Material besteht, kann die Abschlußscheibe 6 auch mit dem Gehäuse 8 verlötet werden.

In der Fig. 2 ist eine Draufsicht auf die metallischen Anschlußkappen 4, 4′ in teilweise geschnittener Darstellung gezeigt. Die Bohrungen 16, 16′ sind für die Verbindungsleitung zu den äußeren Anschlüssen vorgesehen. Zur Verbesserung der Lötkontaktierung können am Umfang der Kappen Durchbrüche 17, 17′ angeordnet sein. Diese Durchbrüche 17, 17′ können beispielsweise gestanzt sein.

Die in den Fig. 1 und 2 dargestellte Ausführungsform eines niederinduktiven, zweipoligen Kondensators weist eine Gesamtinduktivität von < 30nH bis zu den äußeren Anschlüssen 5, 5′ auf. Die Wickelbreite beträgt dabei 66 mm einschließlich der Schoopschichten. Der Abstand Schoopschicht Kontaktebene - äußerer Anschluß beträgt ca. 17 mm. Ein vergleichsweise konventionell aufgebauter Kondensator weist dagegen eine Gesamtinduktivität von > 100 nH auf.

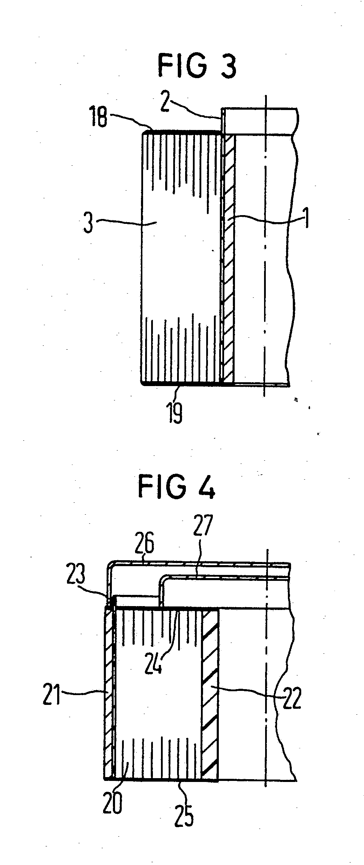

In der Fig. 3 ist eine Ausführungsform dargestellt, bei der die konzentrische Rückleitung über ein metallisches Kernrohr 1 erfolgt. Das Kernrohr 1 ist durch eine Trennfolie 2 gegenüber dem Wickel 3 elektrisch isoliert. Das metallische Kernrohr 1 besteht beispielsweise aus Messing. Bei dieser Ausführungsform sind die Anschlußelemente radial symmetrisch und symmetrisch zueinander einerseits an der Schoopschicht 18 und andererseits am metallischen Kernrohr 1 angeordnet. Der Wickel 3 ist über die Schoopschicht 19 mit dem metallischen Kernrohr 1 in Serie geschaltet.

In der Fig. 4 ist eine Ausführungsform dargestellt, bei der eine auf der Mantelfläche des Kondensatorwickels 20 angeordnete Metallfolie 21 als konzentrische Rückleitung dient. In diesem Fall ist der Wickel 20 auf einem isolierenden Kernrohr 22, z.B. aus Hartpapier, angeordnet und gegenüber der Metallfolie 21 durch eine isolierende Trennfolie 23 isoliert. Die Trennfolie 23 dient auch zur Isolierung der Metallfolie 21 von der Stirnkontaktschicht 24. Die andere Stirnseite des Wickels 20 ist durch die Schoopschicht 25 kontaktiert. An der Stirnkontaktschicht 24 und der Metallfolie 21 sind metallische Anschlußelemente 26, 27 radialsymmetrisch befestigt.

Die Elektroden des Kondensators bestehen beispielsweise aus regenerierfähig dünnen Metallschichten, die auf dielektrisch wirksamen Kunststoffolien angeordnet sind. Weiterhin können die Elektroden beidseitig auf einem Trägermaterial, z.B. Papier, angeordnet und elektrisch miteinander verbunden sein, so daß sich der Elektrodenträger im feldfreien Raum befindet. Als Dielektrikum eignen sich die bekannten Kunststoffmaterialien wie z.B. Polypropylen, Polykarbonat oder Polyethylentherephthalat. Für bestimmte Anwendungsfälle ist es weiterhin vorteilhaft, wenn der Kondensatorwickel mit einer Isolierflüssigkeit imprägniert ist.

Neben den in der Zeichnung dargestellten Ausführungsbeispielen stirnkontaktierter Kondensatoren ist die Erfindung auch bei solchen Kondensatoren anwendbar, deren Elektrode aus selbsttragenden Metallfolien gebildet werden. Hierbei weisen die Metallfolie beispielsweise ankontaktierte Metallbändchen auf, die mit den metallischen Anschlußelementen verbunden werden.

## Ansprüche

1. Elektrischer Wickelkondensator mit kleiner Eigeninduktivität, der in ein Gehäuse eingebaut und dessen Wickel auf einem Kernrohr angeordnet ist, der im Inneren des Gehäuses angeordnete Anschlußelemente besitzt, die radail symmetrisch mit den Elektroden des Kondensators verbunden sind, und die im wesentlichen deckend übereinander, und gegeneinander elektrisch isoliert angeordnet sind, **dadurch gekennzeichnet,** daß die Anschlußelemente als Kappen (4, 4′) ausgebildet sind, und daß zumindest eine Kappe mit ihrem Rand an einer am Kondensatorwickel angeordneten Stirkontaktschicht kontaktiert ist.

2. Elektrischer Wickelkondensator nach Anspruch 1, **dadurch gekennzeichnet,** daß der Kondensatorwickel aus konzentrisch aufeinandergewickelten, in Serie geschalteten Teilkapazitäten (3, 3′) besteht, die durch isolierende Trennfolien (2, 2′) getrennt sind.

3. Elektrischer Wickelkondensator nach einem der Ansprüche 1 bis 2, **dadurch gekennzeichnet,** daß er ein metallisches Kernrohr (1) aufweist, das als koaxialer Rückleiter des einen Kondensatoranschlusses dient.

4. Elektrischer Wickelkondensator nach einem der Ansprüche 1 bis 2, **dadurch gekennzeichnet,** daß er eine Metallfolie (21) auf der äußeren Wickelmantelfläche besitzt, die als koaxialer Rückleiter des einen Kondensatoranschlusses dient.

5. Elektrischer Wickelkondensator nach einem der Ansprüche 1 bis 4, **dadurch gekennzeichnet,** daß die Elektroden derart angeordnet sind, daß sich eine innere Reihenschaltung mit $C_n$ (n gerade) Teilkapazitäten ergibt.

6. Elektrischer Wickelkondensator nach einem der Ansprüche 1 bis 5, **dadurch gekennzeichnet,** daß er als Abschlußscheibe (6) eine partiell metallisierte Epoxidharz-Platine besitzt.

7. Elektrischer Wickelkondensator nach Anspruch 6, **dadurch gekennzeichnet,** daß die Metallisierung der Abschlußscheibe (6) auf der Innenseite im Bereich der Anschlüsse (5, 5') und im Randbereich angeordnet ist.

8. Elektrischer Wickelkondensator nach Anspruch 6 oder 7, **dadurch gekennzeichnet,** daß die Abschlußscheibe (6) mit dem Gehäuse (8) verklebt oder verlötet ist.

## Claims

1. Electrical wound capacitor with small selfinductance, which is built into a housing and the winding of which is arranged on a core tube, which has terminal elements arranged inside the housing, said terminal elements being radially-symmetrically connected to the electrodes of the capacitor and being arranged substantially congruent above one another and electrically insulated from one another, characterized in that the terminal elements are designed as caps (4, 4'), and in that at least one cap is in contact by its edge with an end face contact layer arranged on the capacitor winding.

2. Electrical wound capacitor according to Claim I, characterized in that the capacitor winding consists of subcapacitances (3, 3') concentrically wound on top of one another, connected in series and separated by insulating separating films (2, 2').

3. Electrical wound capacitor according to one of Claims 1 to 2, characterized in that it has a metallic core tube (1) which serves as coaxial return line of one of the capacitor terminals.

4. Electrical wound capacitor according to one of Claims 1 to 2, characterized in that it has a metallic foil (21) on the outer generated winding surface which serves as coaxial return line of one of the capacitor terminals.

5. Electrical wound capacitor according to one of Claims 1 to 4, characterized in that the electrodes are arranged in such a way that an internal series circuit having $C_n$ (n is even) subcapacitances is produced.

6. Electrical wound capacitor according to one of Claims 1 to 5, characterized in that it has a partially metallized epoxy resin waifer as a terminating plate (6).

7. Electrical wound capacitor according to Claim 6, characterized in that the metallization of the terminating plate (6) is arranged on the inside in the region of the terminals (5, 5') and in the edge region.

8. Electrical wound capacitor according to Claim 6 or 7, characterized in that the terminating plate (6) is bonded or soldered to the housing (8).

## Revendications

1. Condensateur électrique enroulé à faible inductance propre, qui est logé dans un boîtier et dont le bobinage est disposé sur un tube central possédant des éléments de raccordement, qui sont disposés à l'intérieur du boîtier, sont raccordés selon une symétrie radiale aux électrodes du condensateur et sont disposés en étant sensiblement en recouvrement et en étant isolés électriquement les uns par rapport aux autres, caractérisé par le fait que les éléments de raccordement sont réalisés sous la forme de capots (4, 4') et qu'au moins un capot est en contact, par son bord, avec une couche de contact frontal disposée sur le bobinage du condensateur.

2. Condensateur électrique enroulé suivant la revendication 1, caractérisé par le fait que le bobinage du condensateur est constitué par des capacités partielles (3, 3') enroulées les unes sur les autres selon une disposition concentrique, branchées en série et séparées par des feuilles de séparation isolantes (2, 2').

3. Condensateur électrique enroulé suivant l'une des revendications 1 et 2, caractérisé par le fait qu'il comporte un tube central métallique (1), qui sert de conducteur coaxial de retour d'une borne du condensateur.

4. Condensateur électrique enroulé suivant l'une des revendications 1 et 2, caractérisé par le fait qu'il possède, sur la surface enveloppe extérieure du bobinage, une feuille métallique (21), qui sert de conducteur coaxial de retour d'une borne du condensateur.

5. Condensateur électrique enroulé suivant l'une des revendications 1 à 4, caractérisé par le fait que les électrodes sont disposées de telle sorte qu'on obtient un circuit série intérieur comportant $C_n$ (n pair) capacités partielles.

6. Condensateur électrique enroulé suivant l'une des revendications 1 à 5, caractérisé par le fait qu'il possède, comme disque de fermeture (6), une platine en résine époxy partiellement métallisée.

7. Condensateur électrique enroulé suivant la revendication 6, caractérisé par le fait que la métallisation du disque de fermeture (6) est disposée sur le côté intérieur au niveau des bornes (5, 5') et dans la zone marginale.

8. Condensateur électrique enroulé suivant la revendication 6 ou 7, caractérisé par le fait que le disque de fermeture (6) est fixé par collage ou soudage

au boîtier (8).

FIG 1

FIG 2

## FIG 3

## FIG 4